# EUROPÄISCHE PATENTSCHRIFT

(11) **EP 3 987 185 B1**
(45) Veröffentlichungstag und Bekanntmachung des Hinweises auf die Patenterteilung: **18.03.2026**
(21) Anmeldenummer: 20732539.0
(22) Anmeldetag: 09.06.2020
(51) Int. Cl.: F04D 15/00, F24D 19/10

(54) **VERFAHREN ZUR REGELUNG EINER UMWÄLZPUMPE SOWIE UMWÄLZPUMPE**
METHOD FOR CONTROLLING A CIRCULATION PUMP AND CIRCULATION PUMP
PROCÉDÉ POUR RÉGLER UNE POMPE DE CIRCULATION ET POMPE DE CIRCULATION

(30) Priorität: 19.06.2019 DE 102019004317
(43) Veröffentlichungstag der Anmeldung: 27.04.2022
(73) Patentinhaber: KSB SE & Co. KGaA, 67227 Frankenthal (DE)
(72) Erfinder: ECKL, Martin, 67227 Frankenthal (DE); HAMKINS, Christopher, 67227 Frankenthal (DE)
(86) Internationale Anmeldenummer: PCT/EP2020/065955
(87) Internationale Veröffentlichungsnummer: WO 2020/254149

(56) Entgegenhaltungen:
- WO-A1-2018/162555
- DE-A1- 102014 018 020

## Beschreibung

Die Erfindung betrifft ein Verfahren zur Regelung einer Umwälzpumpe mit variabler Drehzahl in einer hydraulischen Anlage, insbesondere in einer Heizungsanlage, wobei die Pumpenregelung die Soll-Förderhöhe einstellt und die Drehzahl der Pumpe anpasst, um die Soll-Förderhöhe zu erreichen.

Ältere Heizungs-Umwälzpumpen, insbesondere für Heizungsanlagen kleiner oder mittlerer Leistung, sind oftmals ungeregelt. Die Pumpendrehzahl muss hier manuell auf die jeweilige Leistungsanforderung der Heizungsanlage eingestellt werden, wobei die Pumpe üblicherweise unterschiedliche Drehzahlstufen zur manuellen Auswahl bereithält. Die passende Drehzahlstufe sollte so gewählt werden, dass auch in Zeiten auftretender Leistungsspitzen ein ausreichender Förderstrom für die Raumbeheizung bereitgestellt wird. Da solche Leistungsspitzen meist unregelmäßig und nur kurzzeitig auftreten, läuft eine solche Pumpe überwiegend in einem energetisch ungünstigen Betrieb.

Moderne Umwälzpumpen sind mit Umrichter und Drehzahlregler ausgestattet, wodurch die Pumpen ihre Leistungsaufnahme durch Drehzahlanpassung reduzieren können. Die Anpassung der Drehzahl erfolgt anhand einer spezifischen Regelkurve. Während des Betriebs ermittelt die Pumpe per Sensorik oder Schätzalgorithmus den aktuellen Förderstrom und die Ist-Förderhöhe und stellt die Drehzahl so ein, dass sich der Betriebspunkt nur entlang der verwendeten Regelkurve verschiebt. Die Art der Regelkurve definiert also die zu Grunde gelegte Regelstrategie. Beispielsweise wird bei einer Konstantdruckregelung die Drehzahl unabhängig vom Förderstrom stets auf eine konstante Förderhöhe geregelt. Abweichend davon wird bei einer Proportionaldruckregelung die Förderhöhe entlang einer linear ansteigenden Geraden geregelt, d.h. die Soll-Förderhöhe verhält sich proportional zum Ist-Förderstrom.

Die WO 2018/162555 A1 offenbart ein Verfahren zur Regelung der Drehzahl einer in einem offenen Hydraulikreis betriebenen Kreiselpumpe, wobei der Regler der Pumpensteuerung eine Soll-Drehzahl des Pumpenantriebes unter Berücksichtigung einer Soll- und Ist-Förderhöhe sowie der Ist-Drehzahl berechnet, wobei der Regler für die Berechnung der Soll-Drehzahl einen Korrekturparameter zur Beschreibung der geodätischen Höhe berücksichtigt. Die DE 10 2014 018020 A1 zeigt ein weiteres Verfahren zum Betreiben einer Kreiselpumpe.

Die vorliegende Anmeldung fokussiert sich auf eine Proportionaldruckregelung und sucht nach Optimierungsmöglichkeiten, um die resultierende Leistungsaufnahme der Pumpe weiter reduzieren zu können.

Gelöst wird diese Aufgabe durch ein Verfahren gemäß den Merkmalen des Anspruchs 1. Vorteilhafte Ausgestaltungen des Verfahrens sind Gegenstand der abhängigen Ansprüche.

Erfindungsgemäß wird für das gattungsgemäße Verfahren zur Regelung einer Umwälzpumpe vorgeschlagen, die Dynamik der Drehzahlanpassung anzupassen. Mit der Dynamik der Drehzahlanpassung bzw. Drehzahlregelung ist hiermit die Geschwindigkeit einer solchen Drehzahlanpassung gemeint, um die Pumpe von der Ist-Förderhöhe auf die durch die Regelkurve vorgegebene Soll-Förderhöhe zu bringen. Die Dynamik der Drehzahlregelung soll erfindungsgemäß in Abhängigkeit von der Differenz zwischen Ist- und Soll-Förderhöhe variiert werden und zwar abhängig davon, ob die Soll-Förderhöhe größer oder kleiner der aktuellen Ist-Förderhöhe ist.

Die Pumpenregelung kann auf Grundlage einer Konstantdruckregelung oder einer Proportionaldruckregelug arbeiten. Alternativ kann die Pumpenregelung auch den von der Anmelderin entwickelten Eco-Mode einsetzen. Das Verfahren ist jedoch auch für temperaturgeregelte Pumpen einsetzbar.

Bei der angewendeten Pumpenregelung zur Einstellung der Soll-Förderhöhe wird die Drehzahl des Pumpenantriebs nicht sprungartig verstellt, sondern kontinuierlich erhöht oder reduziert. Die Dynamik der Drehzahlregelung entspricht daher der Drehzahländerungsrate. Erfindungswesentlich ist daher, dass die Drehzahländerungsrate für den Fall, dass die Ist-Förderhöhe Hᵢₛₜ kleiner als Hₛₒₗₗ ist, abweicht von der Drehzahländerungsrate im Fall Hᵢₛₜ größer Hₛₒₗₗ. Durch eine solche Dynamisierung der Drehzahländerungsrate für die beiden Regelungsfälle lässt sich die mittlere Leistungsaufnahme der Umwälzpumpe verringern.

Idealerweise wird für den Fall, dass die Soll-Förderhöhe Hₛₒₗₗ kleiner ist als die aktuelle Ist-Förderhöhe Hᵢₛₜ eine höhere Drehzahländerungsrate gewählt als wenn die erforderliche Soll-Förderhöhe Hₛₒₗₗ größer ist als die aktuelle Ist-Förderhöhe Hᵢₛₜ. Demzufolge wird die Drehzahl bei einer notwendigen Reduzierung schneller geändert als bei einer notwendigen Anhebung der Drehzahl. Durch die vergleichsweise schnelle Verringerung der Pumpendrehzahl kann im Mittel eine geringere Leistungsaufnahme der Pumpe erzielt werden. Demgegenüber wird bei einer Erhöhung der Ist-Förderhöhe und dadurch notwendigen Anhebung der Drehzahl eine vergleichsweise langsamere Drehzahlanpassung gefahren, wodurch die gewünschte Soll-Förderhöhe erst mit gewisser Verzögerung erreicht wird. Durch diese Verzögerung kann es zwar kurzfristig zu einer Unterversorgung der zu beheizenden Räume kommen, aufgrund der thermischen Trägheit ist dies für die Raum insassen jedoch kaum spürbar.

Gemäß bevorzugter Ausführung der Erfindung erfolgt die Drehzahlerhöhung bzw. -verringerung gemäß einer definierbaren zeitabhängigen Drehzahlrampe bis die erforderliche Soll-Förderhöhe erreicht ist. Eine solche Drehzahlregelung entspricht daher in steuerungstechnischer Hinsicht einem Verzögerungsglied erster Ordnung und die Drehzahlrampe verhält sich daher wie ein Tiefpassfilter erster Ordnung. Durch Anpassung der Zeitkonstante kann daher die Steilheit der Rampe und damit die Geschwindigkeit der Drehzahländerung, sprich die Drehzahländerungsrate variiert werden.

Die herangezogenen Drehzahlrampen für die vorgenannte Fallunterscheidung Hₛₒₗₗ<Hᵢₛₜ oder Hₛₒₗₗ>Hᵢₛₜ unterscheiden sich hinsichtlich ihrer Steigung bzw. hinsichtlich ihrer Zeitkonstante. Bevorzugt wird also für den ersten Fall (Hₛₒₗₗ<Hᵢₛₜ) eine sehr steile Drehzahlrampe eingestellt, d. h. die Rampe für Hₛₒₗₗ<Hᵢₛₜ zeichnet sich durch eine niedrigere Zeitkonstante aus als die zweite Drehzahlrampe, wodurch es zu einer raschen Drehzahländerung der Pumpe kommt und die Sollförderhöhe deutlich schneller erreicht wird. Die mittlere Leistungsaufnahme der Pumpe wird dadurch reduziert.

Gemäß einer beispielhaften Ausführungsform der Erfindung kann in der Pumpenregelung eine erste und zweite Drehzahlrampe hinterlegt sein. Der Pumpenregler schätzt oder erfasst den aktuellen Förderstrom und die aktuelle Förderhöhe und vergleicht letztere mit der gemäß der Proportionaldruckkennlinie definierten Soll-Förderhöhe. Liegt die aktuelle Ist-Förderhöhe über der Soll-Förderhöhe, wird für die Einstellung der Soll-Förderhöhe eine notwendige Drehzahländerung gemäß der ersten Drehzahlrampe ausgeführt. Im umgekehrten Fall bei Hₛₒₗₗ>Hᵢₛₜ wird hingegen die zweite Drehzahlrampe für die Drehzahländerung verwendet.

Wie bereits vorstehend erläutert wurde, kann bei einer Erhöhung der Ist-Förderhöhe und einer dadurch notwendigen Anhebung der Drehzahl eine vergleichsweise langsamere Drehzahlanpassung erfolgen, wodurch die gewünschte Soll-Förderhöhe erst mit gewisser Verzögerung erreicht wird. Durch die verzögerte Drehzahlanhebung wird eine notwendige Voraussetzung für eine Überwachung der Heizungsanlage auf mögliche Über- oder Unterversorgung geschaffen, denn durch die verzögerte Drehzahlanhebung ist sichergestellt, dass die Reaktionszeit der Thermostatventile im Vergleich zur Pumpenregelung schneller ist.

Dies ermöglicht zunächst die Überwachung des Förderstroms während der Drehzahlregelung. Erfindungsgemäß ist hierbei vorgesehen, dass die Pumpe während der Drehzahlanpassung, insbesondere während einer Erhöhung der Drehzahl aufgrund Hₛₒₗₗ>Hᵢₛₜ den Förderstrom laufend überwacht. Dabei ist erfindungsgemäß vorgesehen, dass bei einem nahezu konstant bleibenden Förderstrom während der Drehzahlregelung die gefahrene Drehzahländerungsrate weiter abgesenkt wird, insbesondere bis zu einem minimalen Wert, der nur knapp größer null ist.

Vorstellbar ist es beispielsweise, dass neben der hier eingesetzten zweiten Drehzahlrampe noch eine dritte minimale Drehzahlrampe verfügbar ist, auf die bei einer entsprechenden Drehzahlregelung gemäß zweiter Drehzahlrampe umgeschaltet wird, sofern der Ist-Förderstrom auf einem nahezu konstanten Level verbleibt. Bleibt nämlich der Förderstrom trotz Erhöhung der Drehzahl der Pumpe konstant, ist davon auszugehen, dass die verbauten Thermostatventile im Heizkreislauf gleichzeitig schließen, um eine Überversorgung der Räume zu vermeiden. In einem solchen Fall ist es energetisch sinnvoll, auch die Drehzahlerhöhungsrate auf ein Minimum zu reduzieren, d.h. die Drehzahl wird nur noch mit einer minimalen, sehr flachen Drehzahlrampe erhöht. Sinnvollerweise wird währenddessen weiterhin der Förderstrom überwacht, um eine ausreichende Versorgung der zu beheizenden Räume zu prüfen. Tritt bspw. eine Änderung des Förderstroms, d.h. eine Erhöhung des Förderstroms auf, ist dies ein Indiz für das Öffnen der Heizungsventile, so dass auch die Drehzahlregelung von der minimalen Änderungsrate bzw. minimalen Drehzahlrampe zurück auf die ursprüngliche Änderungsrate, d.h. die zweite Drehzahlrampe umgeschaltet werden sollte.

Neben dem erfindungsgemäßen Verfahren betrifft die vorliegende Erfindung zudem eine Umwälzpumpe, insbesondere eine Heizungsumwälzpumpe, mit einer Pumpenregelung zur Ausführung des Verfahrens gemäß der vorliegenden Erfindung bzw. einer vorteilhaften Ausgestaltung der Erfindung. Die Umwälzpumpe zeichnet sich demzufolge durch dieselben Vorteile und Eigenschaften wie das erfindungsgemäße Verfahren aus, weshalb an dieser Stelle zur Vermeidung von Wiederholungen auf eine wiederholende Beschreibung verzichtet werden soll.

Neben der Umwälzpumpe betrifft die vorliegende Erfindung ebenso eine Heizungsanlage mit einer erfindungsgemäßen Umwälzpumpe. Auch diesbezüglich ergeben sich dieselben Vorteile und Eigenschaften.

Weitere Vorteile und Eigenschaften der Erfindung sollen nachfolgend anhand eines in den Figuren dargestellten Ausführungsbeispiels näher erläutert werden. Es zeigen:
- Figur 1:: ein Beispieldiagramm zur Verdeutlichung des Verhaltens eines Tiefpassfilters und
- Figur 2:: eine Funktionsskizze zur Prinzipbeschreibung des erfindungsgemäßen Verfahrens mit adaptiver Rampe

Die Erfindung soll nachfolgend anhand einer Heizungsumwälzpumpe beschrieben werden, die innerhalb eines Heizkreislaufs mit Heizkessel und ein oder mehreren Heizkörpern zum Einsatz kommt. Die Heizkörper sind mit Thermostatventilen ausgestattet, die den Durchfluss durch die Heizkörper in Abhängigkeit der Raumtemperatur steuern.

Die Heizungsumwälzpumpe umfasst einen Umrichter mit Drehzahlregelung, die nach einer Proportionaldruck-Regelkurve arbeitet und die Soll-Förderhöhe proportional zum Ist-Förderstrom einstellt. Das Verfahren ist jedoch auch dann einsetzbar, wenn die Pumpenregelung eine alternative Regelstrategie verfolgt, der Einfachheit halber wird das Verfahren nachfolgend jedoch mit Bezug zu einer Proportionaldruck-Regelkurve erläutert. Um die Sollförderhöhe zu erreichen, steigert oder verringert die Pumpenregelung die Drehzahl des Pumpenantriebs unter Berücksichtigung einer einstellbaren Drehzahlrampe, bis die Soll-Förderhöhe erreicht wird. Eine solche Drehzahlrampe verhält sich in funktionaler Hinsicht wie ein Tiefpass-Filter erster Ordnung mit einstellbaren Zeitkonstanten.

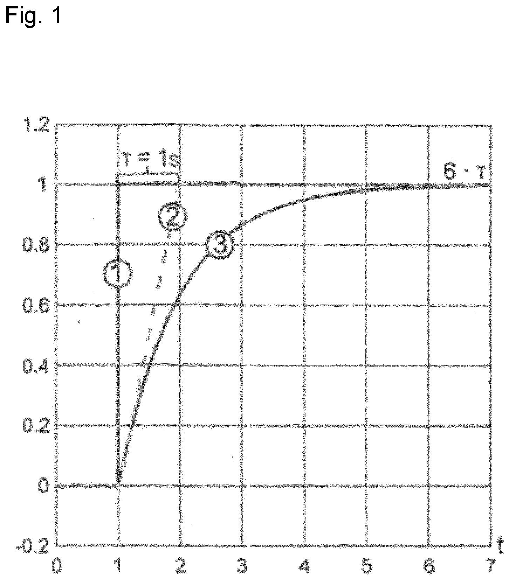

Exemplarisch ist in Figur 1 das zeitliche Verhalten eines bekannten Tiefpasses erster Ordnung gezeigt. Die Figur 1 zeigt einen Sollwertsprung 1 sowie die zugehörige Sprungantwort 3 des Systems. Der Schnittpunkt zwischen der Tangente 2 der Sprungantwort 3 mit dem Endwert ist die Zeitkonstante T. Nach einer Faustregel erreicht die Sprungantwort ihren Endwert nach einer Dauer der sechsfachen Zeitkonstante T.

Um Energie einzusparen, werden zwei Drehzahlrampen verwendet. Ist die Sollförderhöhe Hₛₒₗₗ kleiner als die Ist-Förderhöhe Hᵢₛₜ, dann sinkt die Drehzahl ab. In diesem Fall wird eine steile Drehzahlrampe (niedrige Zeitkonstante) eingestellt, damit die Drehzahl schnell abfällt und die Leistungsaufnahme der Pumpe reduziert wird. Wenn die Sollförderhöhe Hₛₒₗₗ über der Ist-Förderhöhe Hᵢₛₜ liegt, wird stattdessen eine sehr langsame Drehzahlrampe (hohe Zeitkonstante) verwendet, sodass die Drehzahl nur langsam ansteigt und die Ist-Förderhöhe Hᵢₛₜ erst verzögert erreicht wird. In diesem Fall kann es durch die Verzögerung kurzzeitig zu einer Unterversorgung des zu beheizenden Raumes kommen, was aufgrund der üblichen thermischen Trägheit des Raumes aber nicht von den Rauminsassen spürbar ist. Die Pumpe allerdings hat ihre mittlere Leistungsaufnahme reduziert.

Neben der reduzierten Leistungsaufnahme lässt sich mit diesem erfindungsgemäßen Verfahren zudem feststellen, ob der Raum tatsächlich eine Unterversorgung erfahren hat oder ob gegebenenfalls eine Förderhöhe kleiner der Soll-Förderhöhe für die Wärmeversorgung der Räume ausreichend ist. Hierfür ist es notwendig, dass die Regelung der Pumpe langsamer ist als die Reaktion der Thermostatventile der Heizkörper. Die Erfahrung hat gezeigt, dass die Thermostatventile der Heizkörper sehr schnell auf eine Drehzahländerung reagieren. Wenn die Drehzahl der Pumpe sehr langsam steigt, so schließen sich die Ventile (bei ausreichender Wärmeversorgung des Raumes) im Verhältnis dazu schneller und gleichen eine Überversorgung des Raumes aus. Der Förderstrom bleibt in einem solchen Fall trotz steigender Drehzahl der Umwälzpumpe konstant.

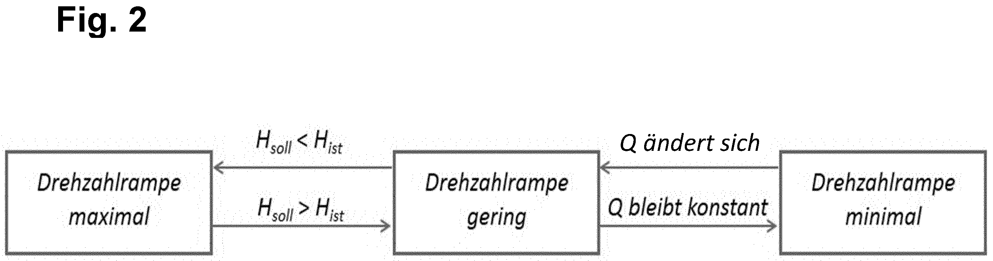

Die Pumpe überwacht fortlaufend während dem Abfahren der Drehzahlrampe ihren Förderstrom. Erkennt die Pumpe in diesem Fall einen konstant bleibenden Förderstrom, so kann die Pumpe den Drehzahlanstieg stoppen, ohne dass der Raum einen Temperaturabfall erfährt. Um fortan zu prüfen, ob der Raum noch ausreichend versorgt bleibt, kann die Pumpe die Drehzahl weiter mit minimaler Drehzahlrampe (nur knapp über null) erhöhen und eine Änderung des Förderstroms prüfen. Dadurch wird permanent überwacht, ob eine Unterversorgung auftritt. Dieses Prinzip ist in Figur 2 verdeutlicht.

## Patentansprüche

1. Verfahren zur Regelung einer Umwälzpumpe mit variabler Drehzahl in einer hydraulischen Anlage, insbesondere in einer Heizungsanlage, wobei die Pumpenregelung eine Soll-Förderhöhe vorgibt und die Drehzahl der Pumpe anpasst, um die Soll-Förderhöhe zu erreichen, wobei die Drehzahländerungsrate dynamisch in Abhängigkeit davon festgelegt wird, ob die Soll-Förderhöhe größer oder kleiner der Ist-Förderhöhe ist, **dadurch gekennzeichnet, dass** während der Drehzahländerung, insbesondere einer Erhöhung der Drehzahl, der Förderstrom überwacht wird und dass bei konstantem Förderstrom die Drehzahländerungsrate abgesenkt wird, insbesondere auf einen minimalen Wert größer null eingestellt wird.

2. Verfahren nach Anspruch 1, **dadurch gekennzeichnet,**
**dass** Drehzahl bis zur Erreichung der Soll-Förderhöhe gemäß einer zeitlichen Drehzahlrampe erhöht oder verringert wird, wobei die Steigung der Rampe dynamisch in Abhängigkeit davon festgelegt wird, ob die Soll-Förderhöhe größer oder kleiner der Ist-Förderhöhe ist.

3. Verfahren nach Anspruch 2, **dadurch gekennzeichnet, dass** sich die Drehzahlrampe steuerungstechnisch wie ein Tiefpassfilter erster Ordnung verhält, deren Steigung durch die Zeitkonstante des Tiefpassfilters beschrieben ist.

4. Verfahren nach einem der vorhergehenden Ansprüche, **dadurch gekennzeichnet, dass** bei Hₛₒₗₗ < Hᵢₛₜ eine höhere Drehzahländerungsrate bzw. kleinere Zeitkonstante gewählt wird als im Fall von Hₛₒₗₗ > Hᵢₛₜ.

5. Verfahren nach einem der Ansprüche 2 bis 4, **dadurch gekennzeichnet, dass** in der Pumpenregelung eine erste und zweite Drehzahlrampe hinterlegt ist, wobei bei Hₛₒₗₗ < Hᵢₛₜ die erste Drehzahlrampe für die Drehzahländerung und bei Hₛₒₗₗ > Hiₛₜ die zweite Drehzahlrampe für die Drehzahländerung eingesetzt wird, und wobei die erste Drehzahlrampe steiler ist als die zweite Drehzahlrampe, d.h. eine niedrigere Zeitkonstante aufweist.

6. Verfahren nach einem der vorhergehenden Ansprüche, **dadurch gekennzeichnet, dass** die Drehzahländerungsrate wieder angehoben wird, insbesondere auf die ursprüngliche Drehzahländerungsrate zurückgesetzt wird, falls eine Änderung des Förderstroms festgestellt wird.

7. Umwälzpumpe, insbesondere Heizungsumwälzpumpe, mit einer Pumpenregelung, die dazu eingerichtet ist, das Verfahren gemäß einem der vorhergehenden Ansprüche auszuführen.

8. Heizungsanlage mit einer Umwälzpumpe gemäß Anspruch 7.

## Claims

1. Method for controlling a circulation pump with variable rotational speed in a hydraulic system, in particular in a heating system, wherein the pump controller predefines a target delivery head and adapts the rotational speed of the pump in order to reach the target delivery head, wherein the rate of change in rotational speed is defined dynamically in a manner dependent on whether the target delivery head is greater than or less than the actual delivery head, **characterized in that** the delivery flow rate is monitored during the changing of the rotational speed, in particular an increasing of the rotational speed, and **in that**, with constant delivery flow rate, the rate of change in rotational speed is decreased, in particular is set to a minimum value greater than zero.

2. Method according to Claim 1, **characterized in that** rotational speed is increased or decreased according to a temporal rotational speed ramp until the target delivery head is reached, wherein the slope of the ramp is defined dynamically in a manner dependent on whether the target delivery head is greater than or less than the actual delivery head.

3. Method according to Claim 2, **characterized in that**, in terms of control, the rotational speed ramp acts like a first-order low-pass filter, the slope of it being described by the time constant of the low-pass filter.

4. Method according to one of the preceding claims, **characterized in that**, if H_{target} < H_{actual}, a higher rate of change in rotational speed or a smaller time constant is selected than in the case of H_{target} > H_{actual}.

5. Method according to one of Claims 2 to 4, **characterized in that** a first rotational speed ramp and a second rotational speed ramp are stored in the pump controller, wherein, if H_{target} < H_{actual}, the first rotational speed ramp is used for the change in rotational speed and, if H_{target} > H_{actual}, the second rotational speed ramp is used for the change in rotational speed, and wherein the first rotational speed ramp is steeper than the second rotational speed ramp, that is to say has a smaller time constant.

6. Method according to one of the preceding claims, **characterized in that** the rate of change in rotational speed is increased again, in particular is reset to the original rate of change in rotational speed, if a change in the delivery flow rate is determined.

7. Circulation pump, in particular a heating circulation pump, having a pump controller which is configured for carrying out the method according to one of the preceding claims.

8. Heating system having a circulation pump according to Claim 7.

## Revendications

1. Procédé pour réguler une pompe de circulation à régime variable dans une installation hydraulique, en particulier dans une installation de chauffage, la régulation de la pompe prédéfinissant une hauteur de refoulement de consigne et adaptant le régime de la pompe pour atteindre la hauteur de refoulement de consigne, la vitesse de variation de régime étant fixée dynamiquement en fonction du fait que la hauteur de refoulement de consigne est supérieure ou inférieure à la hauteur de refoulement réelle, **caractérisé en ce que** le débit de refoulement est surveillé pendant la variation de régime, en particulier pendant une augmentation du régime, et **en ce que**, dans le cas d'un débit de refoulement constant, la vitesse de variation de régime est abaissée, et est en particulier réglée à une valeur minimale supérieure à zéro.

2. Procédé selon la revendication 1, **caractérisé en ce que** le régime est augmenté ou réduit conformément à une rampe temporelle du régime jusqu'à ce que la hauteur de refoulement de consigne soit atteinte, la pente de la rampe étant fixée dynamiquement en fonction du fait que la hauteur de refoulement de consigne est supérieure ou inférieure à la hauteur de refoulement réelle.

3. Procédé selon la revendication 2, **caractérisé en ce que** la rampe de régime se comporte en ce qui concerne la technique de régulation comme un filtre passe-bas du premier ordre dont la pente est décrite par la constante de temps du filtre passe-bas.

4. Procédé selon l'une quelconque des revendications précédentes, **caractérisé en ce que**, lorsque Hₛₒₗₗ < Hᵢₛₜ, la vitesse de variation de régime ou la constante de temps sélectionnée est plus faible que lorsque Hₛₒₗₗ > Hᵢₛₜ.

5. Procédé selon l'une quelconque des revendications 2 à 4, **caractérisé en ce que** des première et deuxième rampes de régime sont stockées dans la régulation de pompe, la première rampe de régime étant réglée pour la variation de régime lorsque Hₛₒₗₗ < Hᵢₛₜ et la deuxième rampe de régime étant réglée pour la variation de régime lorsque Hₛₒₗₗ > Hᵢₛₜ, et la première rampe de régime étant plus raide que la deuxième rampe de régime, c'est-à-dire qu'elle présente une constante de temps inférieure.

6. Procédé selon l'une quelconque des revendications précédentes, **caractérisé en ce que** la vitesse de variation de régime est à nouveau augmentée, en particulier est ramenée à la vitesse de variation de régime initiale lorsqu'une variation du débit de refoulement est détectée.

7. Pompe de circulation, en particulier pompe de circulation de chauffage, comportant une régulation de pompe qui est conçue pour mettre en œuvre le procédé selon l'une quelconque des revendications précédentes.

8. Système de chauffage comprenant une pompe de circulation selon la revendication 7.
